# DEMANDE DE BREVET EUROPEEN

(11) **EP 0 715 944 A1**
(43) Date de publication de la demande: **12.06.1996**
(21) Numéro de dépôt: 95402734.8
(22) Date de dépôt: 05.12.1995
(51) Int. Cl.: B29C 71/04, B29C 59/16

(54) **Procédé de production de réactions chimiques dans un film de polymère**

(30) Priorité: 07.12.1994 FR 9414707
(71) Demandeur: COMMISSARIAT A L'ENERGIE ATOMIQUE, F-75015 Paris (FR)
(72) Inventeur: Deniau, Guy, F-92140 Clamart (FR); Lecayon, Gérard, F-91940 Les Ulis (FR); Demortier, Guy, B-5004 Bouge (BE); Mathot, Serge, B-5170 Profondeville (BE); Delhalle, Joseph, B-5380 Noville les Bois (BE)
(74) Mandataire: Dubois-Chabert, Guy

(57) **Abrégé**

Ce procédé de production directe, de réactions chimiques dans un film de polymère (18), à une certaine profondeur à l'intérieur du film, se caractérise en ce qu'il comporte les étapes suivantes :
- positionner le film de polymère (18) sur le trajet d'un faisceau (14) de particules,
- sélectionner la nature des particules du faisceau en fonction de leur réactivité vis-à-vis des groupements fonctionnels et du squelette du polymère,
- déterminer l'énergie à communiquer aux particules du faisceau en fonction de la profondeur de la zone où doit se réaliser la réaction à l'intérieur du film de polymère,
- irradier le film de polymère par un faisceau (14) des particules sélectionnées, possédant l'énergie déterminée dans l'étape précédente.

## Description

### Domaine technique

La présente invention se rapporte au domaine du traitement chimique de films de polymère, par exemple un film polymère pouvant avoir une épaisseur comprise entre 1 nanomètre et plusieurs micromètres, et notamment au déclenchement et à la production d'une réaction chimique à l'intérieur du film de polymère, directement par interaction avec un faisceau de particules de moyenne ou faible énergie.

### Etat de la technique

Afin de modifier les propriétés de la matière organique, notamment celles des polymères, de nombreuses méthodes basées sur l'utilisation de faisceaux de particules ont été développées pendant ces dernières années (voir en particulier l'article de L. Calcagno et al., intitulé "Structural modification of polymer films by ion irradiation", paru dans Nuclear Instruments & Methods, B65, 1992, pp. 413 et suivantes). Dans certains domaines, ces méthodes sont utilisées de façon intensive ou même industrielle.

Dans le domaine médical, le traitement des tumeurs malignes par protonthérapie connaît actuellement un développement intense. Cette technique consiste à utiliser l'énergie des protons pour détruire les cellules malignes par rupture des liaisons des constituants cellulaires comme l'ADN.

En ce qui concerne les polymères, l'emploi des techniques basées sur l'utilisation des plasmas est développé au niveau industriel dans le but notamment de modifier les propriétés superficielles de ces matériaux.

De nombreuses études sur les polymères font appel à l'utilisation de flux intenses de différentes particules de hautes énergies, telles que des électrons et des ions en général positifs. Ces ions peuvent être soit des ions légers d'hydrogène, d'hélium ou de lithium, soit des ions lourds comme par exemple le xénon.

Ainsi l'irradiation, par des ions légers H⁺ et Li⁺, de polymères de type polycarbonate permet de rompre des liaisons du squelette du polymère, conduisant ainsi à des phénomènes de dégradation. Des résultats analogues sont obtenus lors de l'irradiation de polymères du type polyéthylène, polystyrène, polytétrafluoroéthylène, polyméthylméthacrylate, par des ions hélium avec, dans certains cas, l'observation de phénomènes de formation de réticulation et d'insaturation. De nombreux autres exemples pourraient être cités concernant une très large variété de polymères, mais dans chaque cas, les résultats obtenus correspondent à des dégradation de la matière éventuellement suivies d'étapes de relaxation (interaction avec le milieu environnant, réticulation, insaturation).

Des irradiations avec des faisceaux d'ions lourds ont également été utilisées. Ainsi dans le cas de membranes de polyfluorure de vinylidène, l'exposition à un faisceau d'ions xénon très énergétiques (44 MeV) conduit à la dégradation du polymère : on peut se reporter à ce sujet, à l'article de N. Betz et al., intitulé "Grafting of polystyrene in poly(vinylidene fluoride) films by means of energetic heavy ions", paru dans Macromolecules, 25, 1992, pp. 213 et suivantes.

Dans le domaine des moyennes et faibles énergies, de nombreuses études concernant l'interaction de faisceaux d'ions d'atomes légers ont été réalisées. Celles-ci concernent principalement les interactions de faisceaux d'hydrogène avec les parois de réacteurs à fusion thermonucléaire. Des faisceaux d'hydrogène de basse énergie sont aussi utilisés pour l'analyse de matériaux et, par exemple, pour décrire la structure superficielle de différents métaux.

Récemment, des sources d'atomes neutres (hydrogène, azote, oxygène, etc.) ont également été développées. Ce type de sources est employé pour produire des réactions chimiques à la surface d'échantillons. Par exemple, un faisceau d'hydrogène, produit à partir d'un plasma riche en espèces atomiques, est utilisé pour nettoyer la surface par abrasion ménagée en transformant l'oxygène chimisorbé en molécules d'eau. Un tel procédé est décrit par Watanabe et al. dans "Metalorganic molecular beam epitaxy of GaAs using hydrogen radical beam", Journal of Crystal Growth, 111, 1991, pp. 554 et suivantes.

Parmi tous les procédés précédents, on n'en connaît aucun permettant de produire ou de contrôler une réaction à l'intérieur d'un film de polymère, c'est-à-dire à une certaine distance non nulle et définie en-dessous de la surface de ce film, sans en entraîner la dégradation. On ne connaît que des techniques qui conduisent soit à une dégradation du film à l'intérieur ou bien à une réaction en surface du film.

### Exposé de l'invention

La présente invention a justement pour but de remédier à ce problème.

A cette fin, elle a pour objet un procédé de production directe, de réactions chimiques dans un film de polymère, à une certaine profondeur à l'intérieur du film, caractérisé en ce qu'il comporte les étapes suivantes :
- positionner le film de polymère sur le trajet d'un faisceau de particules,
- sélectionner la nature des particules du faisceau en fonction de leur réactivité vis-à-vis des espèces présentes dans le polymère,
- déterminer l'énergie à communiquer aux particules du faisceau en fonction de la profondeur de la zone où doit se réaliser la réaction à l'intérieur du film,
- irradier le film de polymère par un faisceau de particules sélectionnées possédant l'énergie déterminée dans l'étape précédente.

Avec cette méthode, on peut induire dans le film de polymère des modifications chimiques voulues, tout en limitant fortement l'intervention de phénomènes secondaires ; par exemple, pour un polymère, on limite les phénomènes de réticulation ou d'insaturation, et ceci en choisissant la profondeur de la zone où se passe la réaction (par exemple au voisinage de la surface, ou au coeur du film de polymère, ou au voisinage de l'interface avec le substrat pour les films supportés).

Le film peut être d'épaisseur variable, supporté ou autosupporté.

Dans le cas d'un polymère donné, les espèces impliquées dans la réaction peuvent être des groupements fonctionnels de ce polymère.

La réaction peut alors être une modification de la nature des groupements fonctionnels du polymère.

Ce peut être aussi une fonctionnalisation du polymère, en additionnant sur la chaîne du polymère des atomes donnant lieu à des propriétés chimiques particulières.

Dans tous les cas, les particules peuvent être des espèces neutres ou chargées.

Il est aussi possible d'utiliser de façon simultanée ou séquencée des sources multiples capables de produire des particules de natures différentes, qui permettront de réaliser des transformations chimiques plus complexes résultant, par exemple, de l'action d'espèces bi- ou polyatomiques neutres ou chargées, ces dernières étant formées alors par recombinaison de particules simples avant interaction avec le film de polymère.

Le procédé permet également de réaliser des transformations chimiques de façon locale, à l'intérieur du film de polymère, en utilisant des procédés de focalisation et de déflexion du faisceau primaire d'ions et d'obtenir ainsi des zones spatialement bien définies dans toutes les directions de l'espace, et présentant des propriétés chimiques différentes d'une zone à l'autre.

L'extension latérale du faisceau de particules peut aussi être limitée par un masque.

### Brève description des figures

De toute façon, les caractéristiques et avantages de l'invention apparaîtront mieux à la lumière de la description qui va suivre, et qui porte sur des exemples de réalisation, donnés à titre explicatif et non limitatif, en se référant à des dessins annexés sur lesquels :
- la figure 1 représente schématiquement un dispositif expérimental pour mettre en oeuvre le procédé selon l'invention,
- les figures 2a et 2b représentent des spectres d'absorption d'infrarouge d'un film de polyacrylonitrile respectivement avant (figure 2a) et après (figure 2b) interaction avec un faisceau d'hydrogène neutre de 33keV,
- les figures 3a à 3g représentent les résultats obtenus par des simulations de la profondeur d'arrêt des particules incidentes par rapport à l'échantillon,
- la figure 4 illustre, dans le cas où le procédé est mis en oeuvre avec un masque en surface du film, l'effet de ce masque.

### Exposé détaillé de modes de réalisation de l'invention

Le procédé selon l'invention est basé sur l'utilisation d'un faisceau primaire d'ions positifs pour lequel il est possible, contrairement à un faisceau de particules neutres, de varier de façon contrôlée l'énergie cinétique des particules incidentes.

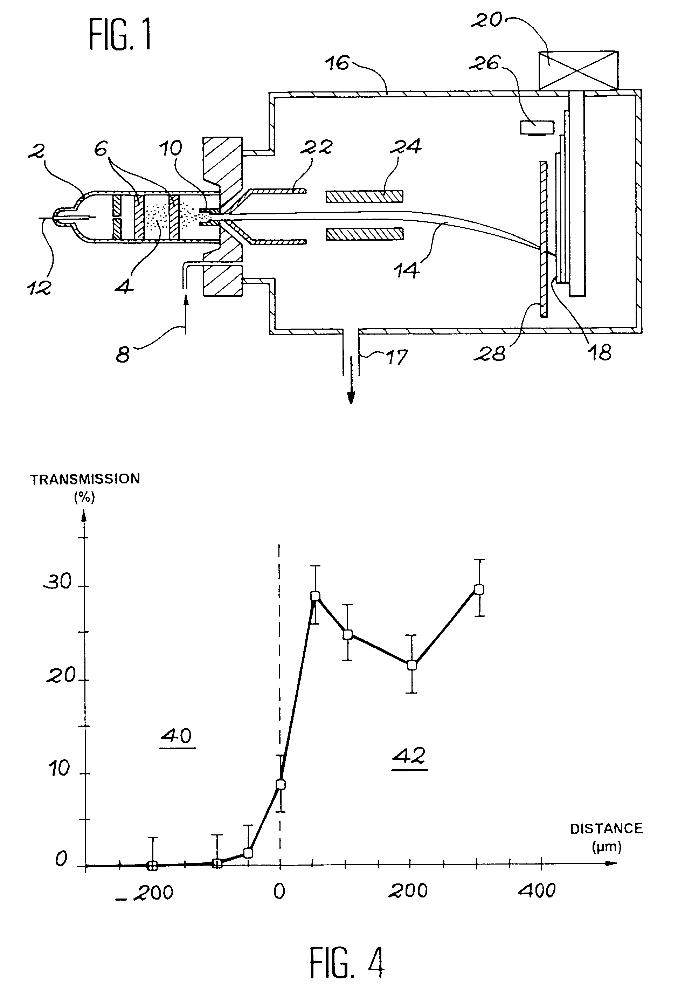

Un premier dispositif pour la mise en oeuvre du procédé selon l'invention est illustré sur la figure 1. La source d'ions utilisée 2 est une source du type HF employée notamment dans les accélérateurs Van de Graaff. La source 2 est constituée d'une capsule de quartz 2 à l'intérieur de laquelle est produit un plasma 4 par l'application, à des électrodes 6, d'un champ électrique haute fréquence (environ 130 MHz, environ 800 V). Un gaz 8 est introduit dans la capsule. La nature de ce gaz est choisie en fonction de la nature des particules incidentes souhaitée (H₂ pour produire un faisceau d'ions H⁺, O₂ pour produire un faisceau d'ions O⁺, etc.), elle-même choisie en fonction de la réaction souhaitée. Ce gaz est introduit par divers moyens (conduite, pompe) non représentés sur la figure 1.

Les ions positifs créés dans le plasma 4 sont extraits de la capsule de quartz 2 sous la forme d'un faisceau 14, à travers un capillaire situé à une extrémité 10 de la capsule. Cette extraction se fait en appliquant à une anode d'extraction 12 située à l'autre extrémité de la capsule une tension positive. Cette tension, non seulement facilite l'extraction des ions positifs, mais permet également de définir leur énergie cinétique. En effet, dans le plasma, les ions positifs ont une énergie cinétique qui est déterminée par la valeur du champ haute fréquence (800 eV maximum pour un champ électrique de 800 V) . La tension positive d'extraction pouvant varier de 2000 à 60000 V, la gamme d'énergie cinétique pour les ions positifs, en sortie de la source, s'étend ainsi de 2 keV (± 800 eV) à 60 keV (± 800 eV). Cette largeur de la gamme d'énergie des ions produits est très importante car on peut, en variant l'énergie, traiter un échantillon, c'est-à-dire induire une réaction dans le film, à des profondeurs différentes. Par exemple, des ions H⁺ d'une énergie cinétique de 2,5 keV seront implantés à une profondeur d'environ 50 nm dans un polymère de type polyacrylonitrile (PAN). Si la tension d'accélération est de 60 kV, c'est-à-dire si l'énergie des ions H⁺ est de 60 keV, le polymère pourra être traité à une profondeur d'environ 1 µm. Inversement, en appliquant un potentiel positif sur l'échantillon, il est possible également de réduire fortement l'énergie des ions positifs incidents (E<1keV) et ainsi de traiter l'extrême surface du polymère.

La source 2 est adaptée sur une chambre à vide 16 compacte permettant les opérations de manipulation de l'échantillon 18 telles que le réglage de la position, de l'orientation, de la distance par rapport à la source. Cette chambre à vide comprend également une électrode de focalisation 22, des électrodes de déflexion électrostatiques 24, et des moyens de neutralisation du faisceau primaire (26, 28) . Ces moyens peuvent être soit un écran métallique 28 ou un canon à électrons 26 émettant un faisceau rasant d'électrons de faible énergie.

En fonction du degré de contrôle exigé sur les processus (influence de polluants, de réactions secondaires induites par le milieu ambiant) l'ensemble des opérations est conduit dans une gamme de vide allant, par exemple, de 10⁻² à 10⁻⁷ Pascal. La chambre 16 est reliée par un conduit 17 à des moyens de pompage non représentés sur la figure 1.

La possibilité d'irradier un film de polymère par des espèces atomiques neutres est très importante en raison de la grande réactivité chimique qui résulte du traitement de neutralisation. Ce dernier conduit en effet à la formation d'espèces radicalaires et/ou dans un état excité.

Le traitement de neutralisation est appliqué après que l'on ait défini l'énergie et l'angle d'incidence du faisceau d'ions primaire 14 et est conduit de manière à garantir l'intégrité ou le contrôle de ces paramètres cinétiques pour les particules neutres formées. Ce procédé permet donc d'obtenir un faisceau de particules neutres d'énergie réglable. Pour des films polymères et compte tenu de la fragilité de ces films, les méthodes à utiliser avec profit sont, par exemple, la neutralisation par un écran métallique 28 ou par un faisceau rasant d'électrons de très faible énergie produit par le canon à électrons 26.

On peut aussi contrôler la distance entre la zone de neutralisation et la surface du film à traiter à l'aide de moyens 20 permettant de modifier la position du film. Un avantage essentiel, dans ce cas, est de pouvoir influencer la nature des particules réactionnelles (atomes et/ou molécules neutres) en jouant sur la distance entre la zone de neutralisation et la surface du polymère de façon à prendre en compte la durée de vie et l'affinité réciproque des espèces neutres créées à l'aide du dispositif de neutralisation.

L'épaisseur de l'écran sera fonction de l'énergie cinétique des particules chargées incidentes et du plus ou moins grand ralentissement souhaité lors du passage à travers l'écran. Ainsi, pour une énergie cinétique initiale d'ions H⁺ de l'ordre d'une dizaine de keV, un écran métallique ayant une épaisseur de quelques dixièmes de microns n'entraînera pratiquement aucune variation d'énergie cinétique, et on obtiendra un faisceau de particules H neutres d'énergie de l'ordre d'une dizaine de keV.

Un autre dispositif pour la mise en oeuvre du procédé est constitué par un accélérateur de particules Van de Graaff, permettant de générer des particules chargées ayant une énergie de plusieurs centaines de keV (donc beaucoup plus importantes que celles obtenues avec le premier dispositif décrit ci-dessus) . On pourra, là aussi, obtenir un faisceau de particules neutres par interposition d'un écran métallique sur le trajet des ions. Mais il faut de plus, que les ions soient considérablement ralentis, de façon à ce que les particules neutres formées arrivent sur le film de polymère avec une énergie telle qu'elles soient arrêtées à l'intérieur du film. Ainsi, pour des ions H+ ayant une énergie de l'ordre de 500 keV, il faut prévoir une épaisseur de l'écran métallique interposé d'environ 5 microns.

Dans ce second dispositif, on peut également prévoir des moyens pour effectuer une déflexion du faisceau d'ions incidents, par exemple des électrodes, et des moyens pour supporter et orienter le film de polymère en travers du faisceau d'ions.

L'exemple suivant illustre les possibilités de la méthode : les résultats ont été obtenus en soumettant des films de polyacrylonitrile, déposés "au trempé", sur des substrats de nickel, à l'action d'un faisceau d'hydrogène neutre après traversée d'une feuille d'aluminium de 5 µm située à 12 cm de la surface de l'échantillon. L'écran métallique permet la neutralisation et le ralentissement de protons primaires de 500 keV produits par le second dispositif décrit ci-dessus (accélérateur Van de Graaff) . Un contrôle des espèces sortantes de la feuille a montré qu'elles sont neutres et qu'elles possèdent une énergie cinétique pouvant être choisie dans une gamme allant de 100 eV à quelques dizaines de keV, par exemple de 100 eV à 50 keV.

Les modifications chimiques subies par le polymère sous l'action du faisceau de particules sont étudiées en suivant, par spectroscopie d'absorption infrarouge, l'évolution de la structure moléculaire du film de polyacrylonitrile d'une épaisseur de 1 µm déposée sur un substrat de nickel.

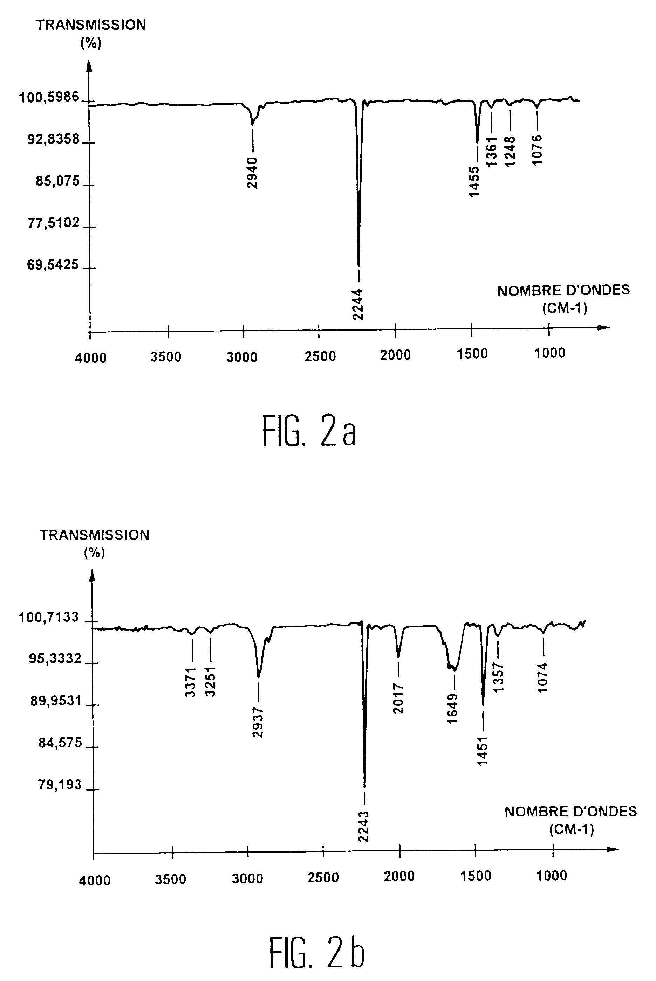

Les figures 2a et 2b montrent respectivement le spectre infrarouge correspondant à l'échantillon témoin (film avant interaction, figure 2a) et à l'échantillon après interaction avec un flux d'hydrogène neutre à 33 keV (figure 2b).

Sur ces spectres, on constate la présence de raies caractéristiques du polyacrylonitrile : vibration d'élongation du CH₂, CH centré sur 2937 cm⁻¹, vibration d'élongation du CN à 2244 cm⁻¹ et vibration de déformation du CH₂ à 1451 et 1357 cm⁻¹. On voit que, après interaction (figure 2b), l'intensité relative de la vibration d'élongation du CN a diminué par rapport à l'intensité de l'ensemble des vibrations attribuées au squelette aliphatique, ce qui traduit la participation du groupement nitrile à un processus réactionnel. Ceci est confirmé par l'observation, sur la figure 2b, d'un ensemble de bandes correspondant à des structures de type amine et notamment des bandes centrées à 3371 et 3251 cm⁻¹ attribuables à des vibrations d'élongation de groupements NH₂ et NH. Un large massif, centré à environ 1649 cm⁻¹, correspond aux vibrations de déformation des liaisons N-H de structures aminées. Une autre bande est également visible à 2017 cm⁻¹, et correspond à l'existence de structures de type NH₃⁺. De l'ensemble de ces observations, on peut en déduire que :
- le squelette aliphatique n'a pas subi d'évolution significative entre l'échantillon témoin avant interaction et l'échantillon après interaction,
- et que l'ensemble des interactions a concerné le groupement nitrile qui a été largement transformé en structure de type aminé.

On a donc bien une réaction chimique à l'intérieur du film, mais pas de dégradation importante du polymère comme dans l'art antérieur, ni de réaction en surface de l'échantillon.

On peut, de façon plus précise, proposer le mécanisme réactionnel suivant. Deux types de réaction (I) et (II) sont induits par les espèces neutres H :

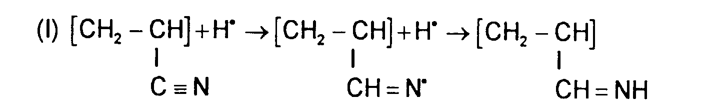

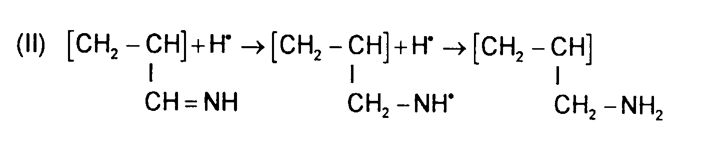

D'autre part, une partie des espèces neutres peut être de nouveau ionisée à l'intérieur même du film polymère, ce qui induit un troisième type de réaction (III) :

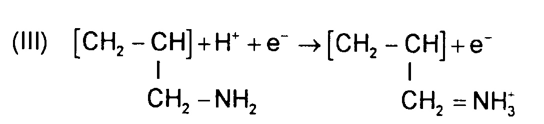

A énergie cinétique des particules neutres plus élevée, des réactions parasites mettant en jeu le squelette du polymère se produiront, notamment : 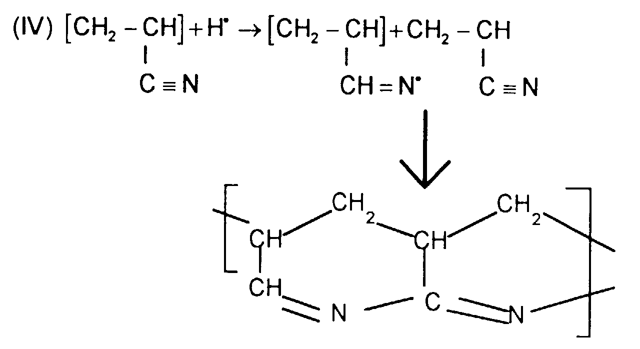 et :

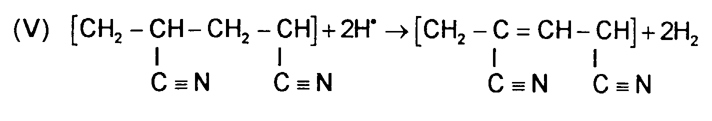

La profondeur à laquelle à l'intérieur du film de polymère, les réactions se produisent est la profondeur à laquelle les particules neutres s'arrêtent. Cette profondeur dépend donc de l'énergie cinétique des particules neutres incidentes, et puisque ce sont les paramètres suivants qui déterminent cette dernière, de l'énergie cinétique du faisceau d'ions primaires avant traversée de l'écran ralentisseur et de l'épaisseur de cet écran.

Cette profondeur peut être modulée ainsi que le montre les exemples suivants, qui consistent en des simulations de l'arrêt des particules, à l'aide d'un programme connu par ailleurs (programme TRIM, reposant sur les formules de Bethe qui décrivent les interactions particule-matière, et pour lequel de plus amples détails sont donnés dans l'ouvrage de J.F. Ziegler et al., intitulé "the stopping and range of ions in matter", vol. 1, Pargamon Press, New York (1985)).

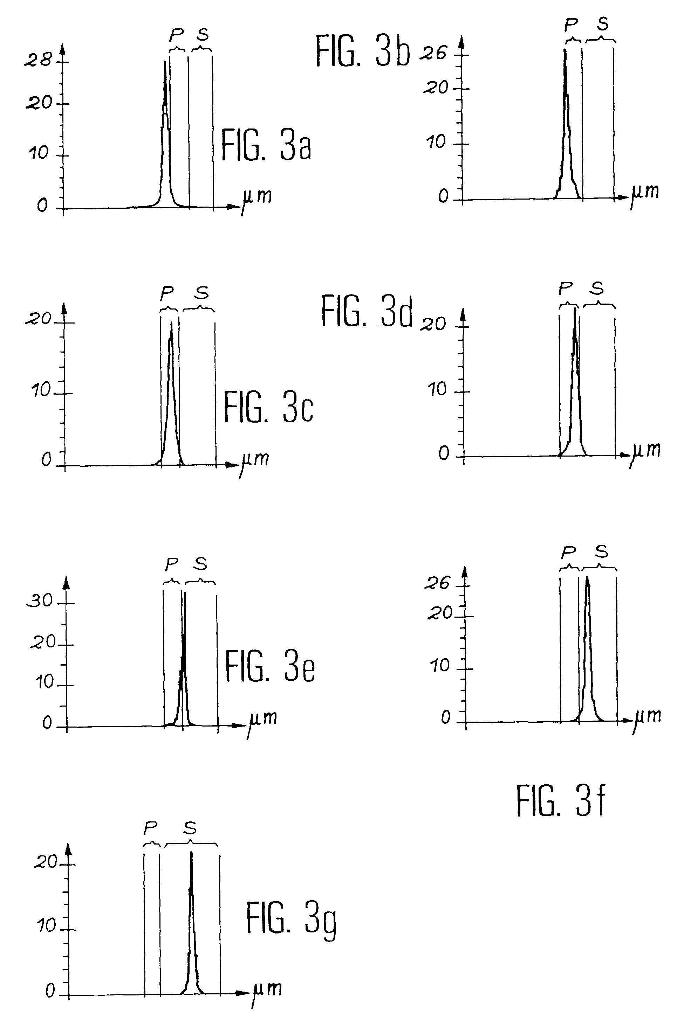

Les résultats sont illustré sur les figures 3a à 3g, pour un film de polymère P de 1 µm d'épaisseur reposant sur un substrat S métallique. L'énergie du faisceau d'ions H⁺ incidents, avant traversée de l'écran de neutralisation, et l'épaisseur x de cet écran sont données pour chacune des figures dans le tableau suivant :

**TABLEAU**

| **Figures** | **E (keV)** | **x (µm)** |
|---|---|---|
| 3a | 500 | 5,77 |
| 3b | 500 | 5,39 |
| 3c | 500 | 5,17 |
| 3d | 500 | 5,00 |
| 3e | 525 | 5,17 |
| 3f | 550 | 5,00 |
| 3g | 650 | 5,00 |

Dans chacune des figures 3a à 3g, la courbe représente la distribution de la profondeur d'arrêt des particules neutres incidentes par rapport au film polymère dont la position est repérée par P, la position du substrat étant repérée par S. On voit que, par exemple dans les cas 3b à 3d, la très grande majorité des particules neutres s'arrête à l'intérieur du film polymère. Le cas de la figure 3b correspond à l'exemple du film de polyacrylonitrile détaillé ci-dessus (500 keV, 5 µm), ce qui prouve que l'on peut réaliser :
- une réaction chimique (par exemple du type (I)-(II)-(III) ci-dessus),
- à l'intérieur du film polymère, à une profondeur variable en fonction de l'énergie cinétique des particules incidentes,
- sans destruction de la structure du polymère (c'est-à-dire que la réaction est contrôlée).

Le procédé selon l'invention peut être combiné avec un système de résolution latérale en utilisant des masques ou une focalisation des particules incidentes, par exemple par l'intermédiaire de diaphragmes ou de dispositifs électromagnétiques. Ceci permet :
- de réaliser la modification de la structure du film polymère avec une résolution latérale de l'ordre du micron.
- d'obtenir à la surface du film polymère des zones de géométrie variable et présentant des réactivités chimiques différentes.

Cette possibilité est illustrée sur la figure 4. sur cette figure, on peut suivre l'évolution d'une bande d'absorption infrarouge centrée sur 1630 cm⁻¹, qui correspond à la formation des fonctions aminées. La mesure est effectuée en déplaçant une plage d'analyse de 80 µm de diamètre d'un microscope infrarouge.

Une zone du film de polymère a été masquée avant et pendant l'irradiation par le faisceau d'hydrogène neutre. On distingue bien, sur la figure 4, entre la zone irradiée 40 et la zone 42 qui a été masquée pendant l'irradiation, la position du bord du masque coïncidant avec l'origine des abscisses.

Un procédé, tel que décrit ci-dessus, de déclenchement contrôlé de réactions chimiques dans des films de polymères peut avoir les applications suivantes :
1. Modification en surface et en profondeur (<1000nm) de la nature chimique de groupes fonctionnels (-CBN, -CHO, etc.) portés par des chaînes de polymères préalablement déposés ou chimiquement greffés en films ultraminces sur des substrats organiques et inorganiques.
2. Les films modifiés pourront servir de surfaces capables, par exemple, de lier de manière covalente des molécules d'intérêt divers, notamment biologique. La nature du substrat et l'épaisseur des films permettront, à partir de divers stimuli, notamment électrique, de contrôler plus aisément diverses fonctions telles que la perméation, l'absorption, la transmission/conversion d'énergie, la biosensibilité, le mode de croissance cellulaire, etc.
3. Il sera aussi possible de favoriser une réticulation spécifique entre le polymère hôte et des molécules introduites volontairement dans les films préalablement formés par exemple une réticulation proton-déclenchée entre des chaînes de polyacrylonitrile et des molécules de type fullerène. Pour des raisons analogues à celles mentionnées ci-dessus, il sera possible de modifier par la médiation du substrat les réponses (électroluminescence, etc.) de tels matériaux sous l'effet de stimuli.

## Revendications

1. Procédé de production directe, de réactions chimiques dans un film de polymère (18), à une certaine profondeur à l'intérieur du film de polymère, caractérisé en ce qu'il comporte les étapes suivantes :
- positionner le film de polymère (18) sur le trajet d'un faisceau (14) de particules,
- sélectionner la nature des particules du faisceau en fonction de leur réactivité vis-à-vis des groupements fonctionnels et du squelette du polymère,
- déterminer l'énergie à communiquer aux particules du faisceau en fonction de la profondeur de la zone où doit se réaliser la réaction à l'intérieur du film de polymère,
- irradier le film par un faisceau (14) des particules sélectionnées, possédant l'énergie déterminée dans l'étape précédente.

2. Procédé selon la revendication 1, caractérisé en ce que le film est d'épaisseur variable, supporté ou autosupporté.

3. Procédé selon la revendication 2, caractérisé en ce que les espèces du film impliquées dans la réaction sont des groupements fonctionnels de ce polymère.

4. Procédé selon la revendication 3, caractérisé en ce que la réaction est une modification de la nature des groupements fonctionnels du polymère.

5. Procédé selon la revendication 3, caractérisé en ce que la réaction est une fonctionnalisation du polymère.

6. Procédé selon la revendication 1, caractérisé en ce que l'énergie des particules incidentes sur le film est contrôlée entre 100 eV et quelques dizaines de keV.

7. Procédé selon l'une des revendications précédentes, caractérisé en ce que les particules sont des particules neutres.

8. Procédé selon l'une des revendications 1 à 6, caractérisé en ce que les particules sont des particules chargées.

9. Procédé selon la revendication 1, caractérisé en ce que le faisceau de particules est déflecté sur son trajet en direction du film.

10. Procédé selon l'une des revendications 1 ou 9, caractérisé en ce que l'extension latérale du faisceau de particules est limitée par un masque.
